# EUROPÄISCHE PATENTSCHRIFT

(11) **EP 0 423 573 B1**
(45) Veröffentlichungstag und Bekanntmachung des Hinweises auf die Patenterteilung: **15.12.1993**
(21) Anmeldenummer: 90119214.6
(22) Anmeldetag: 06.10.1990
(51) Int. Cl.: F16F 9/49

(54) **Endanschlagdämpfer zur Dämpfung einer in ein Fahrzeugrad eingeleiteten Stossenergie**
End stop damper for damping the energy applied to vehicle wheels
Butée de fin de course pour l'amortissement des chocs auxquels est soumise une roue de véhicule

(30) Priorität: 19.10.1989 DE 3934896
(43) Veröffentlichungstag der Anmeldung: 24.04.1991
(73) Patentinhaber: Krauss-Maffei Aktiengesellschaft, 80997 München (DE)
(72) Erfinder: Seit, Horst, Ing., W-8086 Moorenweis (DE)

(56) Entgegenhaltungen:
- US-A- 2 853 974
- US-A- 2 907 414
- US-A- 3 036 669
- PATENT ABSTRACTS OF JAPAN, Band 8, Nr. 203 (M-326)[1640], 18. September 1984; & JP-A-59 93 540 (YAMAHA HATSUDOKI K.K.) 30-05-1984

## Beschreibung

Die Erfindung betrifft einen Endanschlagdämpfer gemäß Oberbegriff des Patentanspruchs 1.

Ein Endanschlagdämpfer dieser Art ist aus der Literatur "Wie funktioniert das; Die Technik im Leben von heute", Bibliographisches Institut AG, Mannheim, 2. Auflage, Seite 301, Abbildung 8 bekannt, der aus Gummifedern besteht, die zur Kompensation von in das Fahrwerk eines Fahrzeugs eingeleiteten Stößen dienen, deren Energie die vom Hauptstoßdämpfer kompensierbare Energie überschreitet. Die Gummifedern haben jedoch den Nachteil einer weitgehend linearen Kennlinie wodurch sich bei vorgegebener zulässiger Höchstkraft nur eine verhältnismäßig geringe Arbeitsaufnahme erzielen läßt. Da jedoch im praktischen Einsatz eines Fahrzeugs Energiepotentiale entstehen können, die bei der linearen Arbeitsaufnahmecharakteristik einer Gummifeder Höchstkräfte zur Folge haben, die zu Zerstörungen an den Anlenkpunkten an der Radaufhängung und am Fahrzeugaufbau führen können, bieten Gummifedern als Endanschlagdämpfer nur bedingte Sicherheit gegen Beschädigungen des Fahrwerks. Darüber hinaus wird in Gummifedern die Energie überwiegend nur gespeichert und - im ungeeigneten Zeitpunkt - wieder in die Radaufhängung oder den Fahrzeugaufbau abgegeben, was zu einem unkontrollierten Aufschaukeln des Fahrzeugaufbaus führen kann.

Der Erfindung liegt daher die Aufgabe zugrunde, einen Endanschlagdämpfer zu schaffen, der ohne der Notwendigkeit einer konstruktiven Veränderung des Systems von Federung und Stoßdämpfer eines Fahrzeugrades anstelle einer Gummifeder angeordnet werden kann und der bei gleicher Höchstkraft im wesentlichen eine Verdoppelung der Arbeitsaufnahme ermöglicht.

Es ist zwar aus Patent Abstracts of Japan, Band 8, Nr. 203 (M-326)[1640] 18.9.1984 bekannt als Endanschlagdämpfer einen hydraulischen Dämpfer zu verwenden, jedoch wird dort nicht auf ein zusätzliches elastisches Element verzichtet. Außerdem wird die hydraulische Kraft durch ein Überström ventil erreicht und es ist keine Möglichkeit vorgesehen die Dämpfungskraft Weg-abhänbgig zu beeinflussen.

Diese Aufgabe wird durch die Merkmale des Patentanspruchs 1 gelöst. Dabei wird lediglich der hydraulische Stoßdämpfer anstelle der Gummifeder auf der Kolbenstange des Hauptstoßdämpfers angeordnet. Aufgrund der Dichtungsreibung die an den Stellen erfolgt, an denen die Kolbenstange des Hauptstoßdämpfers den oberen und unteren Hülsenboden des hydraulischen Stoßdämpfers durchsetzt, bleibt dieser in einer oberen Position fixiert. Wird der vorgegebene freie Federweg überschritten, schiebt sich der hydraulische Stoßdämpfer teleskopartig zusammen und erzeugt aufgrund der Reibung der Flüssigkeit im axial sich verlängernden Ringspalt zwischen innerer und äußerer Hülse eine geschwindigkeitsabhängige Gegenkraft, die anstelle der linearen Arbeitsaufnahmecharakteristik der Gummifeder eine, eine Verdoppelung der Arbeitsaufnahme repräsentierende Rechteckcharakteristik ergibt. Da die Schwingungsenergie durch Reibung der Flüssigkeit in Wärme übergeführt wird, entsteht keine Rückstellkraft.

In einer vorteilhaften Ausführungsform weist der obere Hülsenboden eine Ringnut auf, durch die sich beim Eintauchen der inneren Hülse für die Flüssigkeit nach einer Umlenkung eine Verlängerung des Steuerspaltes ergibt. Damit kann in gezielter Weise ein Stufensprung in der Kraft-Weg-Kennlinie des hydraulischen Endanschlagdämpfers erzielt werden.

Die Erfindung wird nachfolgend anhand der Zeichnung näher erläutert.

Es zeigen :
- Fig. 1: die schematische Ansicht eines über eine Federung, einen Hauptstoßdämpfer und einen Endanschlagdämpfer am Fahrzeugaufbau abgestützten Fahrzeugrades,
- Fig. 2: zwei Halbschnitte eines Endanschlagdämpfers nach dem Stand der Technik mit im linken Halbschnitt unbelastet und im rechten Halbschnitt belastet dargestellter Gummifeder,
- Fig. 3: zwei Halbschnitte eines als hydraulischer Anschlagdämpfer ausgebildeten Endanschlagdämpfers mit im linken Halbschnitt unbelastet und im rechten Halbschnitt belastet dargestelltem hydraulischen Anschlagdämpfer,
- Fig. 4: ein Arbeitsaufnahmediagramm mit Kraft-Weg-Kennlinien eines aus einer Gummifeder (lineare Kennlinie L) und einem hydraulischen Anschlagdämpfer (Rechteckkennlinie R) bestehenden Endanschlagdämpfers,
- Fig. 5: ein Arbeitsaufnahmediagramm mit Rechteckcharakteristik und Stufensprung gemäß der Ausführung durch mit Ringnut verlängertem Ringspalt.

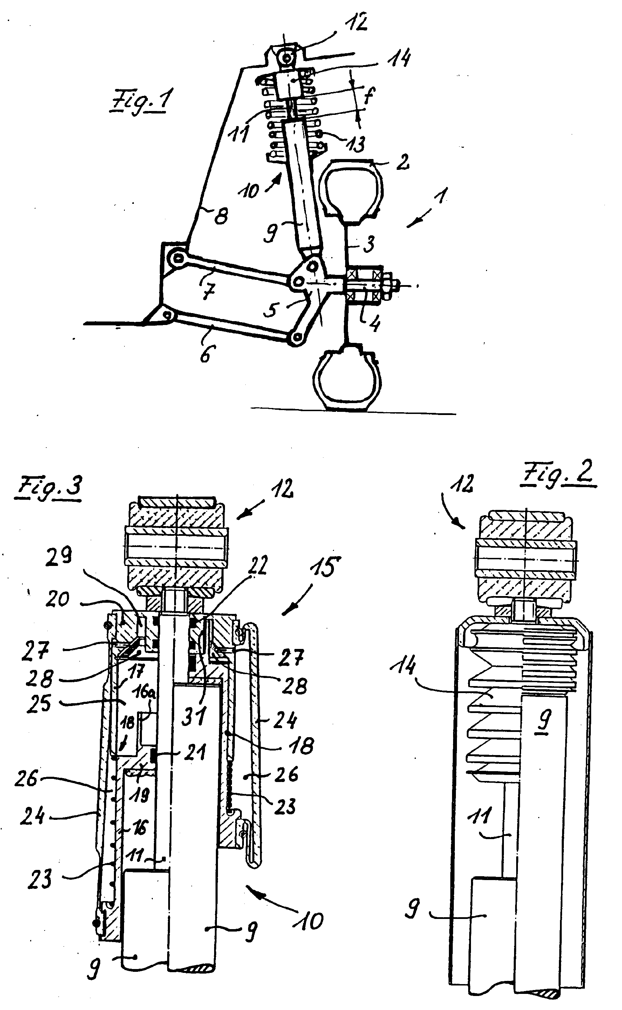

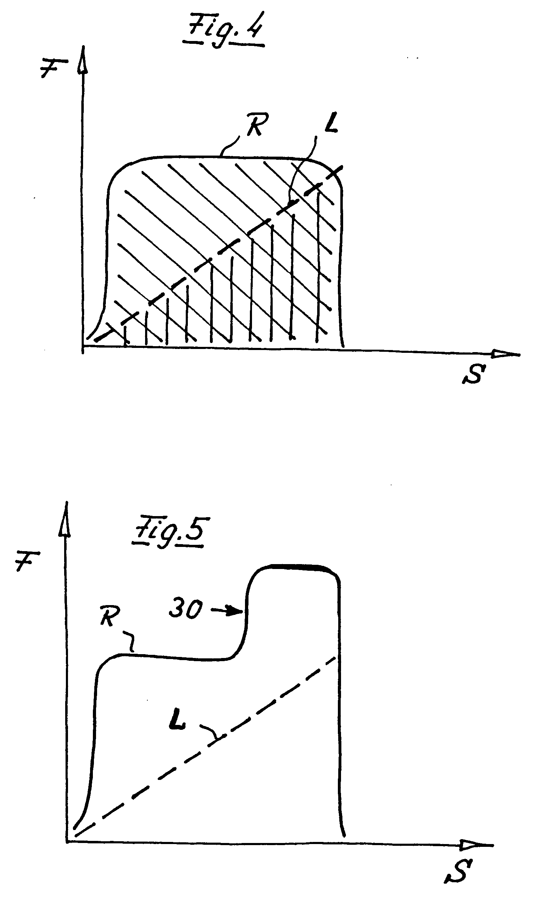

Die Fig. 1 zeigt ein Fahrwerk, bestehend aus einem Fahrzeugrad 1 mit einem Reifen 2, einer Felge 3 sowie einem darin gelagerten Achszapfen 4 mit Radaufhängung 5 und daran angelenkten Querlenkern 6 und 7, die wiederum am Fahrzeugaufbau 8 eines Fahrzeugs angelenkt sind. An der Radaufhängung 5 ist ferner der Arbeitszylinder 9 eines den Hauptstoßdämpfer 10 darstellenden Teleskopstoßdämpfers angelenkt, dessen Kolbenstange 11 mit einem Ringgelenk 12 am Fahrzeugaufbau 8 angelenkt ist. Der Hauptstoßdämpfer 10 ist von einer die Federung des Fahrzeugrades 1 darstellenden Schraubenfeder 13 umgeben. Zwischen dem Arbeitszylinder 9 und dem Ringgelenk 12 befindet sich ein von der Kolbenstange 11 durchsetzter Endanschlagdämpfer 14, der nach dem Stand der Technik im wesentlichen aus einer Gummifeder und nach der Erfindung aus einem hydraulischen Anschlagdämpfer 15 besteht, wie dieser in Fig. 3 dargestellt ist.

Der hydraulische Anschlagdämpfer 15 besteht aus einer inneren Hülse 16, die teleskopisch in einer äußeren Hülse 17 verschiebbar ist, wobei sich zwischen den Hülsen 16 und 17 ein Ringspalt 18 mit veränderbarer axialer Länge befindet. Die innere und die äußere Hülse 16 und 17 weisen jeweils einen unteren und einen oberen Hülsenboden 19 und 20 auf, wobei beide Hülsenböden 19,20 von der Kolbenstange 11 des Hauptstoßdämpfers 10 durchsetzt sind und jeweils mit einer Dichtung 21 und 22 versehen sind. Zwischen den Hülsenböden 19,20 befindet sich eine Druckfeder 23.

Die innere und die äußere Hülse 16,17 sind von einer elastischen Manschette 24 umgeben, die jeweils außen an den beiden Hülsenböden 19 und 20 befestigt ist und die sich beim Zusammenschieben der inneren und äußeren Hülse an einem oder an beiden Enden nach Umknickung zylindrisch in das Mittelteil der elastischen Manschette einschiebt. Der von der inneren und äußeren Hülse 16 und 17 sowie den beiden Hülsenböden 19 und 20 umschlossene Innenraum 25 ist vollständig mit Hydrauliköl gefüllt und steht über den Ringspalt 18 mit einem Außenraum 26 in Verbindung der von der elastischen Manschette 24 und den Außenflächen der inneren und äußeren Hülse 16 und 17 gebildet wird.

Der Außenraum 26 und der Innenraum 25 sind ferner über mindestens einen im oberen Hülsenboden 20 ausgebildeten Rücklaufkanal 27 miteinander verbunden, der mit einem von innen nach außen sperrenden Rückschlagventil 28 versehen ist. Im oberen Hülsenboden 20 ist eine Ringnut 29 ausgebildet, in die die innere Hülse 16 bis zum Erreichen des Festanschlags mit einen Hülsenansatz 16 a eintauchen kann, bei dem der Hülsenansatz 16 a am Grund der Ringnut 29 am oberen Hülsenboden 20 anschlägt.

Wird im Betrieb der vorgegebene freie Federweg f (Fig. 1) überschritten, kommt der Arbeitszylinder 9 des Hauptstoßdämpfers 10 am unteren Hülsenboden 19 des hydraulischen Anschlagdämpfers 15 zur Auflage, wodurch dieser von seiner Ausgangsposition gemäß Fig. 3, linker Halbschnitt bis in eine Endposition gemäß Fig. 3, rechter Halbschnitt teleskopisch zusammengeschoben werden kann. Es wird dabei gemäß der Bemessung der Weite des Ringspaltes 18 eine beliebig festlegbare, geschwindigkeitsabhängige Gegenkraft erzeugt, die auf einem Kraft (F)-Weg (S)-Diagramm, wie es in Fig. 4 dargestellt ist, eine die Arbeitsaufnahme des hydraulischen Anschlagdämpfers repräsentierende Rechteckfläche (schräge Schraffur) umreißt. Zur Steuerung der in Fig. 4 in Volllinien dargestellten Aechteckkennlinie wird der über den Einfederungsweg axial sich verlängernde Ringspalt 18 zwischen der inneren und der äußeren Hülse genutzt, so daß bei zwangsläufig durch die Arbeitsaufnahme abnehmender Geschwindigkeit ein axial länger werdender Ringspalt die Gegenkraft konstant hält, bevor bei der theoretischen Gegenkraft 0 der Festanschlag erreicht wird.

Vor Erreichen des mechanischen Festanschlags taucht die innere Hülse 16 in die im oberen Hülsenboden 20 ausgebildete Ringnut 29 ein, die eine Zone noch weiter steigerbarer Bremswirkung darstellt, die sich infolge einer zusätzlichen Umlenkung der Hydraulikflüssigkeit und einer axialen Verlängerung des Ringspaltes um einen inneren Ringspalt 31 ergibt. Diese Maßnahme wirkt sich in einem Kraft (F)-Weg (S)-Diagramm, wie es in Fig. 5 dargestellt ist, als Stufensprung 30 aus, wodurch sich das Arbeitsaufnahmevermögen des hydraulischen Anschlagdämpfers 15 um den vom Stufensprung umrissenen Flächenbereich noch weiter erhöhen läßt.

Die lediglich durch eine Gummifeder erzielbare Arbeitsaufnahme ist durch die in den Figuren 4 und 5 in unterbrochenen Linien dargestellte lineare Kennlinie und die Fläche mit senkrechter Schraffur verdeutlicht.

Das beim teleskopischen Zusammenschieben aus dem Innenraum 25 über den Ringspalt 18 in den Außenraum 26 gepreßte Volumen an Hydraulikflüssigkeit führt zu einer Aufweitung der elastischen Manschette 24, die sich nach Beendigung der Stoßbelastung durch Zurückleiten der Hydraulikflüssigkeit über den Rücklaufkanal 27 wieder zurückstellt. Der Rücklauf wird dabei maßgeblich durch die im Innenraum angeordnete Druckfeder 23 bewirkt.

## Patentansprüche

1. Endanschlagdämpfer zur Dämpfung einer in ein Fahrzeugrad eingeleiteten Stoßenergie, weiche die von der Federung und vom Hauptstoßdämpfer des Fahrzeugrades kompensierbare Stoßenergie überschreitet, wobei der Hauptstoßdämpfer ein Teleskopstoßdämpfer ist, der im wesentlichen aus einem Arbeitszylinder besteht, der an einem Ende an der Radaufhängung des Fahrzeugrades angelenkt ist und am anderen Ende von der Kolbenstange eines im Arbeitszylinder angeordneten Arbeitskolbens durchsetzt ist, die mit ihrem freien Ende am Fahrzeugaufbau angelenkt ist, und wobei zwischen der Anlenkung der Kolbenstange und dem von dieser durchsetzten Ende des Arbeitszylinders der Endanschlagdämpfer angeordnet ist, **dadurch gekennzeichnet**, daß der Endanschlagdämpfer ein hydraulischer Anschlagsdämpfer (15) ist, bei dem die unter Stoßbelastung gegeneinander bewegbaren Anschlagdämpferelemente Hydraulikflüssigkeit durch einen zwischen den Anschlagdämpferelementen befindlichen Spalt pressen, der sich entsprechend der Gegeneinanderbewegung der Anschlagdämpferelemente axial nach der Maßgabe verlängert und in der Weite so bemessen ist, daß sich in einem Kraft (Ordinate F (kN)) - Weg (Abskizze S (mm)) - Diagramm im wesentlichen eine geschwindigkeitsabhängige, die Arbeitsaufnahme des Endanschlagdämpfers repräsentierende Rechteckkennlinie R einstellt.

2. Endanschlagdämpfer nach Anspruch 1, **dadurch gekennzeichnet**, daß der Anschlagdämpfer (15) aus einer inneren, das eine Anschlagdämpferelement darstellenden Hülse (16) besteht, die unter Bildung eines Ringspaltes (18) innerhalb einer äußeren, das andere Anschlagdämpferelement darstellenden Hülse (17) teleskopisch verschiebbar ist, wobei die innere und die äußere Hülse (16 und 17) an den dem Ringspalt (18) entgegengesetzten Enden jeweils mit einem unteren und einem oberen Hülsenboden (19 und 20) abgschlossen ist, die beide von der Kolbenstange (11) abdichtend durchsetzt sind und die von einer Druckfeder (23) beaufschlagt sind, wobei die innere und die äußere Hülse (16 und 17) von einer elastischen Manschette (24) umschlossen sind, die am Außenrand des unteren und des oberen Hülsenbodens (19 und 20) befestigt ist, und zwischen dem von der inneren Hülse (16) und der elastischen Manschette (24) eingeschlossenen Außenraum (26) und dem von der innneren und der äußeren Hülse (16 und 17) eingeschlossenen Innenraum (25) einer oder mehrere Rücklaufkanäle (27) angeordnet sind, die ein in Richtung vom Innenraum (25) zum Außenraum (26) sperrendes Rückschlagventil (28) aufweisen.

3. Endanschlagdämpfer nach Anspruch 2, **dadurch gekennzeichnet**, daß der obere Hülsenboden (20) der äußeren Hülse (17) eine Ringnut (29) aufweist, durch die beim Eintauchen eines Hülsenansatzes (16a) zusätzlich ein innerer Ringspalt (31) entsteht.

4. Endanschlagdämpfer nach einem der Ansprüche 2 oder 3, **dadurch gekennzeichnet**, daß die elastische Manschette (24) eine Rollmanschette ist.

## Claims

1. A limit stop damper for damping impact energy introduced into a vehicle wheel and which exceeds the impact energy which can be compensated by the suspension and the main shock-absorber of the vehicle wheel, the main shock-absorber being a telescopic shock-absorber which consists essentially of a working cylinder which is at one end articulated on the wheel suspension of the vehicle wheel while at the other end it is traversed by the piston rod of a working piston disposed in the working cylinder the free end of the piston rod being articulated on the vehicle superstructure and whereby, between the articulation of the piston rod and the end of the working cylinder which is traversed by the piston rod there is the limit stop damper, characterised in that the limit stop damper is a hydraulic stop damper (15) in which the stop damper elements adapted for movement in respect of each other under impact loading force hydraulic fluid through a gap which exists between the stop damper elements and which, according to the movement of the stop damper elements towards each other becomes axially extended and its width so dimensioned that in a force (ordinate F (kN)) - path (abscissa S (mm)) - chart substantially a speed-dependent rectangular characteristic curve R is formed which represents the work input of the limit stop damper.

2. A limit stop damper according to Claim 1, characterised in that the stop damper (15) consists of an inner sleeve (16) which represents a stop damper element and which, while forming an annular gap (18) is adapted for telescopic displacement within an outer sleeve (17) which represents the other stop damper element, the inner and the outer sleeves (16 and 17) being sealed at their ends opposite the annular gap (18) by respective top and bottom sleeve end members (19 and 20) both of which are traversed in sealing-tight manner by the piston rod (11) and are biased by a thrust spring (23), the inner and the outer sleeves (16 and 17) being enclosed by an elastic cuff (24) which is fixed at the outer edge of the top and bottom sleeve end members (19 and 20) and in that there are between the outer space (26) enclosed by the inner sleeve (16) and the elastic cuff (24) and the inner space (25) enclosed by the inner and outer sleeves (16 and 17) one or a plurality of return flow passages (27) which have a non-return valve (28) which provides a shut-off function in the direction from the inner space (25) to the outer space (26).

3. A limit stop damper according to Claim 2, characterised in that the upper sleeve end member (20) on the outer sleeve (17) has an annular groove (29) through which an inner annular gap (31) is additionally formed when a projection (16a) on the sleeve is inserted.

4. A limit stop damper according to one of Claims 2 or 3, characterised in that the elastic cuff (24) is a roll cuff.

## Revendications

1. Amortisseur à butée de fin de course, destiné à absorber la quantité d'énergie des chocs auxquels est soumise une roue de véhicule, qui excède la quantité d'énergie qui peut être absorbée par l'amortisseur principal du véhicule, cet amortisseur principal étant un amortisseur télescopique composé essentiellement d'un vérin hydraulique qui est articulé d'un côté sur l'étrier de support de la roue et dans l'autre extrémité duquel passe la tige du piston de ce vérin, laquelle est articulée à son extrémité libre sur le châssis du véhicule, l'amortisseur à butée de fin de course étant disposé entre cette articulation de la tige du piston et l'extrémité du vérin dans laquelle cette tige passe, amortisseur de butée caractérisé en ce qu'il est un amortisseur hydraulique (15), dans lequel les éléments qui se déplacent l'un vers l'autre sous la contrainte des chocs chassent le fluide hydraulique par un interstice qui se trouve entre ces éléments, dont la longueur axiale augmente en fonction du déplacement l'un vers l'autre desdits éléments et qui est calculé de manière à faire apparaître sur un graphique force (ordonnéesF(kN)-course (abscisses S (mm)) une courbe caractéristique rectangulaire R dépendant sensiblement de la vitesse et représentant l'absorption d'énergie par l'amortisseur à butée de fin de course.

2. Amortisseur à butée de fin de course selon la revendication 1, caractérisé en ce que cet amortisseur (15) est composé d'un manchon intérieur (16) qui constitue l'un des éléments de cet amortisseur et qui peut coulisser télescopiquement, en ménageant un interstice annulaire (18), dans un manchon extérieur (17) constituant l'autre élément de l'amortisseur, ces manchons intérieur et extérieur (16, 17) étant fermés, à leur extrémité opposée à l'interstice (18), par une plaque de fond respective, inférieure (19) et supérieure (20), plaques dans lesquelles passe hermétiquement la tige (11) du piston et qui sont soumises à l'action d'un ressort de compression (23), les manchons (16, 17) étant entourés par une garniture (24) élastique qui est fixée au bord des plaques de fond (19, 20), et un ou plusieurs canaux (27) de retour étant formés entre la chambre extérieure (26) délimitée par le manchon intérieur (16) et cette garniture (24) et la chambre intérieure (25) délimitée par les manchons intérieur et extérieur (16, 17) et comportant une soupape de retenue (28), qui interdit le passage, de cette chambre intérieure (25) vers cette chambre extérieure (26).

3. Amortisseur à butée de fin de course selon la revendication 2, caractérisé en ce que la plaque de fond (20) supérieure du manchon extérieur (17) est creusée d'une rainure annulaire (29), par l'entremise de laquelle il se forme un interstice annulaire (31) supplémentaire quand un prolongement (16a) de manchon intérieur (16) pénètre dans cette rainure (29).

4. Amortisseur à butée de fin de course selon l'une des revendications 2 ou 3, caractérisé en ce que la garniture élastique (24) est une garniture à enroulement.
